# EUROPEAN PATENT APPLICATION

(11) **EP 4 648 475 A1**
(43) Date of publication of application: **12.11.2025**
(21) Application number: 25169738.9
(22) Date of filing: 10.04.2025
(51) Int. Cl.: H04W 28/26, G05D 1/00, H04L 45/122, H04L 67/61, H04W 4/029, H04W 4/40, H04W 16/18, H04W 40/12, H04W 28/24

(54) **REMOTE SUPPORT SYSTEM AND MANAGEMENT METHOD**

(30) Priority: 19.04.2024 JP 2024068387
(71) Applicant: TOYOTA JIDOSHA KABUSHIKI KAISHA, Toyota-shi, Aichi-ken, 471-8571 (JP)
(72) Inventor: MOMOSE, Hirofumi, Toyota-shi, 471-8571 (JP)
(74) Representative: D Young & Co LLP

(57) **Abstract**

A remote support system (1) for remote support of a moving body (100) includes a management device (300) and one or more relay devices (400) different from the management device (300). The management device (300) is configured to receive a support request (REQ) transmitted from the moving body (100) and select a support resource required for the remote support. The one or more relay devices (400) are configured to relay data communication performed during the remote support between the moving body (100) and a remote support terminal (200).

## Description

### TECHNICAL FIELD

The present disclosure relates to a remote support system for a moving body and a management device used for remote support for a moving body.

### BACKGROUND ART

Patent Literature 1 disclosed a method for remotely controlling a vehicle. The method performs remote control via a dispatcher that receives a support request from a vehicle and a control center that allocates resources necessary for remote control.

### List of Related Art

Patent Literature 1: Japanese Patent Application Laid-Open No. 2020 - 205037

### SUMMARY

Communication between a vehicle that receives remote support and a remote support terminal in a remote support system will be considered. Patent Literature 1 does not mention how the vehicle and the terminal for the remote control communicate with each other while remote control is executed.

The present disclosure aims to provide a technique capable of flexibly changing a configuration related to communication between a vehicle and a remote support terminal, in accordance with a scale of a remote support system.

A first aspect relates to a remote support system for remote support of a moving body. The remote support system includes a management device and one or more relay devices different from the management device. The management device is configured to receive a support request transmitted from the moving body and select a support resource required for the remote support. The one or more relay devices are configured to relay data communication performed during the remote support between the moving body and a remote support terminal.

A second aspect relates to a management method for remote support for a moving body performed by a management device. The management method includes:
receiving a support request transmitted from the moving body;
selecting a support resource required for the remote support; and
selecting one or more relay devices, different from the management device, from among a plurality of relay device candidates. The one or more relay devices are configured to relay data communication between the moving body and a remote support terminal.

According to the first aspect, the remote support system includes the management device and the relay device having different functions: the management device transmits and receives the support request and select the support resource, and the relay device relays communication between the moving body and the remote support terminal. This composition makes it possible to select to add or remove either the management device or the relay device according to the required function, when the scale of the remote support system is changed. This can improve the adaptability (scalability) of the remote support system to scale changes.

According to a second aspect, a management device selects one or more relay devices from among a plurality of relay device candidates. Thus, a relay device that properly functions can be selected from among the relay device candidates, even if some relay device candidates do not function due to failure or maintenance. Therefore, the overall function of the remote support system is maintained enough to work, resulting in improved function sustainability of the remote support system.

### BRIEF DESCRIPTION OF DRAWINGS

FIG. 1 is a diagram showing an overview of remote support for a vehicle;
FIG. 2 is a schematic diagram showing an example of a data recording process;
FIG. 3 is a schematic diagram showing an example of relay device selection;
FIG. 4 is a schematic diagram for explaining a priority for the relay device selection;
FIG. 5 is a block diagram showing a configuration of the vehicle;
FIG. 6 is a block diagram showing a configuration of a management device;
FIG. 7 is a block diagram showing a configuration of a relay device;
FIG. 8 is a block diagram showing a configuration of a remote support terminal;
FIG. 9 is a diagram illustrating a large-scale embodiment of a remote support system.

### DETAILED DESCRIPTION

Embodiments of the present disclosure will be described with reference to the drawings. In the following description, a "moving body" is represented by a "vehicle". The technique of the present disclosure works even if "vehicle" in the following description is replaced with (or generalized to) "moving body". The moving body includes a drone, a robot, a ship, etc. in addition to the vehicle.

### 1. REMOTE SUPPORT SYSTEM

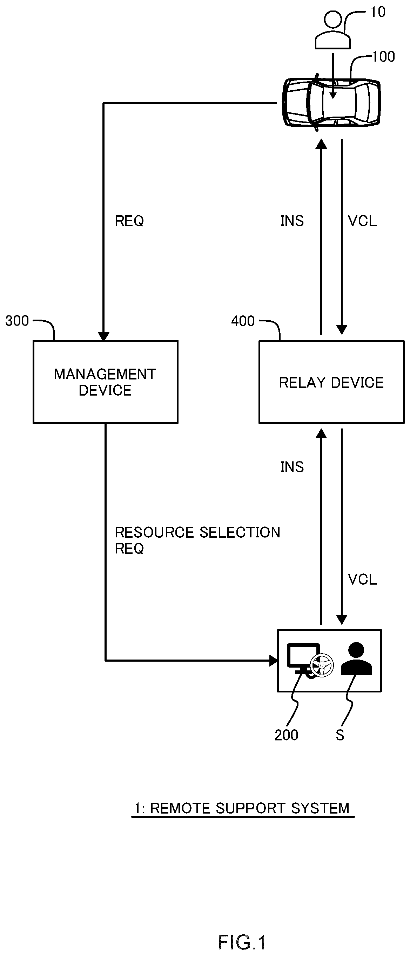

FIG. 1 is a diagram illustrating an overview of remote support for a vehicle 100. The remote support is executed by a remote support system 1. The remote support system 1 includes a vehicle 100, a remote support terminal 200, a management device 300, and one or more relay devices 400. The vehicle 100, the remote support terminal 200, the management device 300, and the one or more relay devices 400 can communicate with each other via a communication network. Hereinafter, one or more relay devices 400 are simply referred to as "relay device 400".

The vehicle 100 is a target of remote support. The vehicle 100 may be an autonomous driving vehicle. The autonomous driving herein is assumed to be one on the premise that the driver does not necessarily concentrate 100% on driving (so-called autonomous driving level 3 or higher). The vehicle 100 may be an autonomous driving vehicle of level 4 or higher, which does not require a driver. The vehicle 100 includes a variety of sensors, including a camera mounted on the vehicle 100. For example, the camera captures an image of the situation around the vehicle 100 and acquires the image indicating the situation. The vehicle 100 performs autonomous driving using the sensors.

The remote support refers to all interventions on the vehicle 100 performed through communication by a remote supporter S located away from the vehicle 100. The remote support is a concept including remote monitoring, remote assistance, and remote driving. The remote monitoring includes monitoring of the environment around the vehicle 100, the vehicle state of the vehicle 100, the state of a user of the vehicle 100, etc. The remote assistance indicates that the remote supporter S gives an instruction regarding traveling in the vehicle 100 when a request is sent from the vehicle 100. For example, when the vehicle 100, which is an autonomous driving vehicle, cannot determine an appropriate timing for starting, changing lanes, turning right or left, etc., the vehicle 100 transmits an assistance request to the remote support system 1. The remote supporter S who has received the assistance request gives the autonomous driving vehicle an instruction about appropriate timing. The remote driving refers to controlling the traveling of the vehicle 100 based on an input to the remote support terminal 200 operated by the remote supporter S.

The remote support terminal 200 is a terminal device used when the remote supporter S performs remote support for the vehicle 100. The remote support terminal 200 can also be referred to as a remote support HMI (human machine interface).

The management device 300 manages remote support. The management device 300 can communicate with the vehicle 100, the remote support terminal 200, and the relay device 400 via the communication network. Typically, the management device 300 is a management server on a cloud. The management server may be configured by a plurality of servers that perform distributed process.

The relay device 400 relays data communication between the vehicle 100 and the remote support terminal 200 during remote support for the vehicle 100.

When the vehicle 100 is an autonomous driving vehicle, the vehicle 100 executes a variety of vehicle processes. Typical vehicle processes during autonomous driving includes the following.
(1) Recognition process: the vehicle 100 recognizes the situation around the vehicle 100 using recognition sensors. For example, the vehicle 100 recognizes a state of a traffic light (for example, a green light, a yellow light, a red light, a right turn signal, etc.) with a camera.
(2) Action determination process: the vehicle 100 determines whether or not to execute an action on the basis of the result of the recognition process. Examples of the action include starting, stopping, turning right, turning left, and changing lanes, etc.
(3) Timing determination process: the vehicle 100 determines the timing at which the above-described action should be executed.

Typically, the remote support by the remote supporter S is necessary in a situation where the autonomous driving is difficult to be performed. For example, remote support may be required when a camera of the vehicle 100 cannot recognize the state of a traffic signal at an intersection or when the vehicle 100 cannot determine the timing of lane changes.

When the vehicle 100 determines that remote support is necessary, the vehicle 100 requests remote support. Specifically, the vehicle 100 transmits a support request REQ to the management device 300.

The vehicle 100 according to the present embodiment is not limited to an autonomous driving vehicle. The remote support system 1 is also applicable when a driver who is driving (manually) the vehicle 100 or a user in the vehicle 100 needs remote support. In this regard, the expression "the vehicle 100 requests remote support" in the present specification includes a case where a driver or a user in the vehicle 100 requests remote support. A driver or a user in the vehicle 100 who requests remote support is hereinafter referred to as a "support requester 10".

The management device 300 receives the support request REQ transmitted from the vehicle 100, and then selects a support resource necessary for the remote support for the vehicle 100. The support resource means equipment and human resources necessary for remote support, including the remote supporter S, the remote support terminal 200, and the relay device 400. The process to select a support resource to be used for the remote support is hereinafter referred to as "resource selection".

The management device 300 transmits a notification including the support request REQ and information of the vehicle 100 to the remote support terminal 200. The remote support terminal 200 presents the notification to the remote supporter S. The remote supporter S recognizes that the remote supporter S itself is assigned to the vehicle 100, and starts remote support for the vehicle 100.

During the remote support, the vehicle 100 and the remote support terminal 200 communicate to transmit a variety of data via the relay device 400. During the remote support, the vehicle 100 and the remote support terminal 200 may communicate to transmit a variety of data via the relay device 400 without the management device 300. The vehicle 100 transmits the vehicle information VCL to the relay device 400. The vehicle information VCL includes a state of the vehicle 100, an image of the surroundings of the vehicle 100 obtained by a camera, the result of the vehicle processes, etc. The relay device 400 transmits the received vehicle information VCL to the remote support terminal 200. The remote support terminal 200 presents the vehicle information VCL received from the vehicle 100 to the remote supporter S.

The remote supporter S checks the presented vehicle information VCL to recognize the surroundings of the vehicle 100, and then performs remote support for the vehicle 100. For example, the remote support includes at least one of the recognition process, the action determination process, and the timing determination process described above. Supporter instruction INS is an instruction to the vehicle 100 input by the remote supporter S. For example, the supporter instruction INS instructs the vehicle 100 to start. The remote support terminal 200 receives the input of the supporter instruction INS from the remote supporter S, and then transmits the input supporter instruction INS to the relay device 400. Relay device 400 transmits the received supporter instruction INS to vehicle 100. The vehicle 100 performs vehicle control in accordance with the supporter instruction INS received from relay device 400.

The relay of data communication by the relay device 400 is effective in maintaining high-speed communication in remote support. High-speed communication is required for communication between the vehicle 100 and the remote support terminal 200. This is because information such as the vehicle information VCL and the supporter instruction INS is constantly transmitted and received between the vehicle 100 and the remote support terminal 200 during the remote support. For example, the remote supporter S determines what he/ she instructs through the supporter instruction INS by viewing the image output to the remote support terminal 200. Serious troubles may occur if the supporter instruction INS is not transmitted at an appropriate timing due to a delay in communication etc. Accordingly, the relay device 400 preferably has high process performance, because the relay device 400 needs to promptly transmit the received information. On the other hand, the management device 300, which is in charge of transmission and reception of the support request REQ and resource selection, does not require process performance as high as the relay device 400, because its processing load is not so high compared with the relay device 400.

### 2. RELAY DEVICE

### 2-1. Recording by relay device

The relay device 400 may at least temporarily record at least a part of data received through data communication, in addition to relaying the data communication during remote support between the vehicle 100 and the remote support terminal 200. Hereinafter, the data recording performed by the relay device 400 is referred to as "data recording process", and the data to be subjected to the data recording process is referred to as "recording target data RD". The recording target data RD includes at least a part of the vehicle information VCL and the supporter instruction INS. The recording target data RD is stored in, for example, a storage area (for example, a memory device 470 described later) included in the relay device 400.

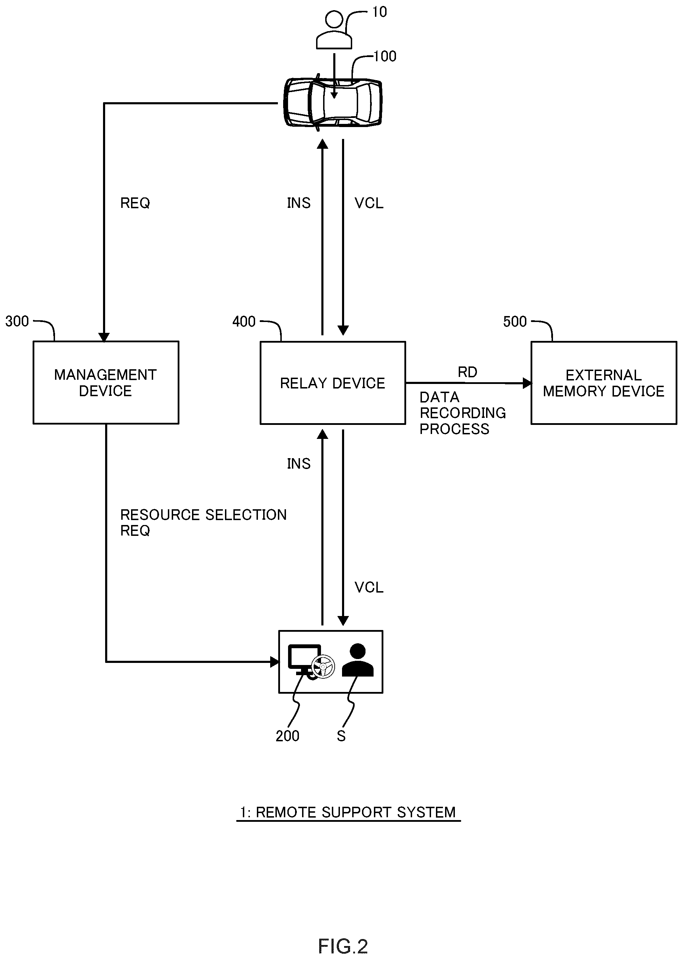

FIG. 2 is a schematic diagram showing another example of the data recording process. The relay device 400 transfers the recording target data RD to one or more external memory devices 500 (hereinafter, simply referred to as "external memory device 500"), different from the relay device 400. The recording target data RD is stored in the external memory device 500. the relay device 400 deletes the recording target data RD in the relay device 400 after transferring the recording target data RD.

### 2-2. Outline of relay device selection

A case where the remote support system 1 includes a plurality of relay device candidates 400c is considered. Each of the plurality of relay device candidates 400c has the same configuration and function as the relay device 400 described above has. In this case, the management device 300 selects the relay device 400 to be actually used for the remote support for the vehicle 100 from among the plurality of relay device candidates 400c. This process is hereinafter referred to as "relay device selection".

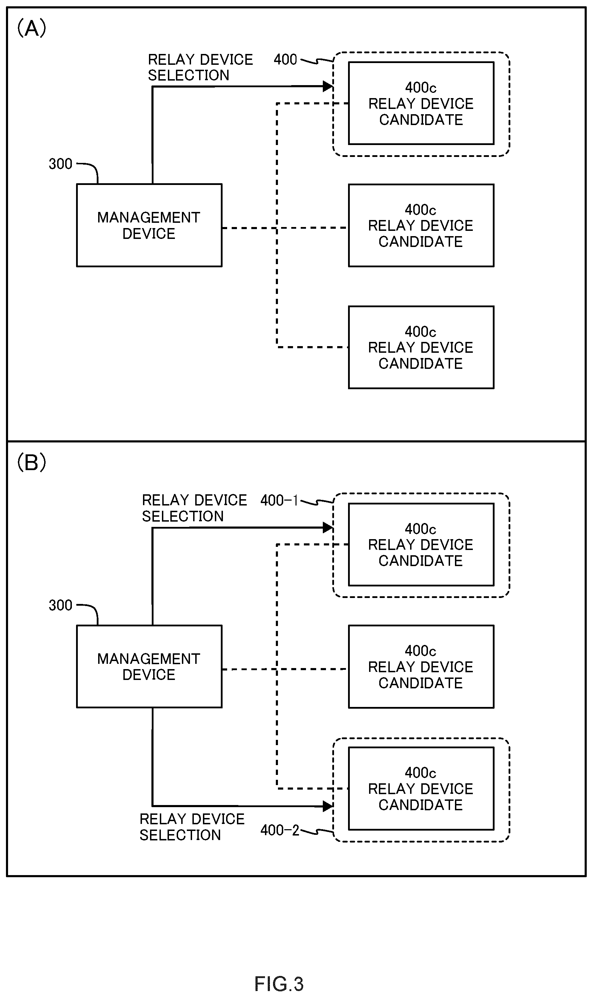

FIG. 3 is a schematic diagram showing an example of the relay device selection. In part (A) of FIG. 3, the management device 300 selects a single relay device 400 from among the plurality of relay device candidates 400c by the relay device selection. As illustrated in part (B) of FIG. 3, the management device 300 may select a plurality of relay devices 400 by the relay device selection. In part (B) of FIG. 3, a first relay device 400-1 and a second relay device 400-2 are selected. In this case, for example, a mode is established in which data from the vehicle 100 to the remote support terminal 200 (e.g., the vehicle information VCL) is relayed by the first relay device 400-1, and conversely, data from the remote support terminal 200 to the vehicle 100 (e.g., the supporter instruction INS) is relayed by the second relay device 400-2. That is, the plurality of relay devices 400 can be selectively used as appropriate. The details of the process associated with the relay device selection will be described later.

### 2-3. Effect

The remote support system 1 includes different devices with different functions: the management device 300 and the relay device 400. The management device 300 transmits and receives the support request REQ and selects a resource, while the relay device 400 relays the communication between the vehicle 100 and the remote support terminal 200. This feature improves adaptability (scalability) when the scale of the remote support system 1 changes. For example, a case where the roles of the management device 300 and the relay device 400 are integrated into one device (management relay device) is considered. In this case, as the number of vehicles using remote support increases, the management relay device itself needs to be added. On the other hand, in the remote support system 1 of the present disclosure, the relay device 400 having a large processing load can be added, while the number of the management devices 300 having a relatively small processing load is unchanged. An example of the remote support system 1 with a large scale will be described in Section 5.

The recording target data RD recorded when the relay device 400 performs the data recording process is useful as "fair" record. That is, the recording target data RD is information transmitted and received during the remote support, and is not arbitrarily provided by the support requester 10 or the remote supporter S. For example, when a trouble occurs during the remote support, the recording target data RD can be used as evidence provided by a third party (an image of an in-vehicle camera, a transmitted signal from the remote support terminal 200, etc.). In addition, when the relay device 400 transfers the recording target data RD to the external memory device 500, the scalability of the system is further improved, as the relay device 400 and the external memory device 500 have different roles. Further, when the relay device 400 transfers the recording target data RD to the external memory device 500, it is possible to prevent a situation in which the storage capacity of the relay device 400 is used up and new recording target data RD cannot be recorded.

Furthermore, when the relay device 400 is selected by the relay device selection, the function continuity of the remote support system 1 can be improved. For example, even when some of the plurality of relay device candidates 400c do not function due to failure or maintenance, the relay device 400 can be properly selected from among the plurality of relay device candidates 400c that function normally. Therefore, the overall functions of the remote support system 1 are maintained.

### 3. DETAILS OF RELAY DEVICE SELECTION

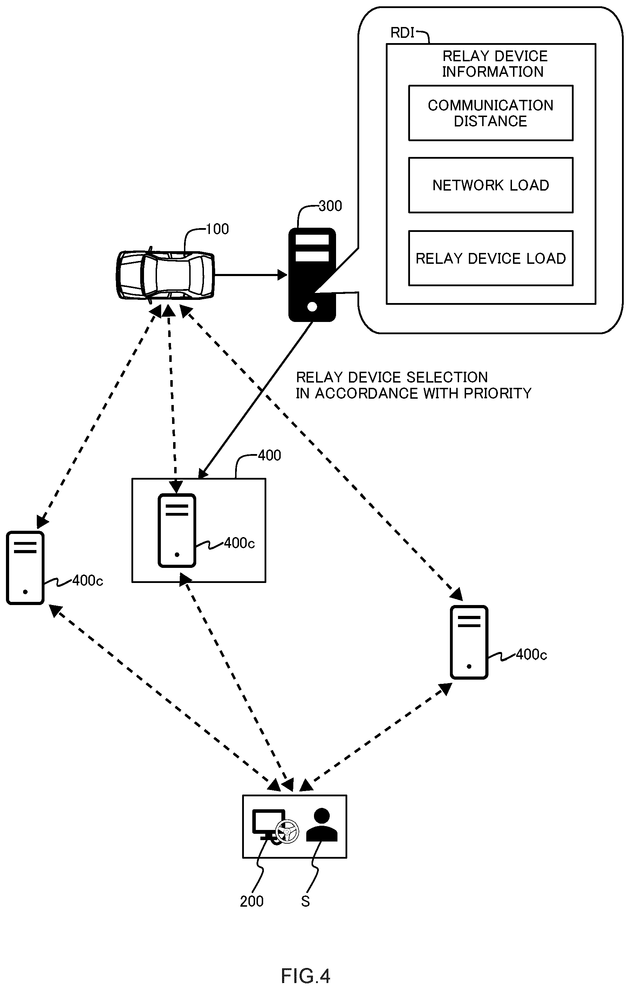

The relay device selection may be executed based on a priority set for each of the plurality of relay device candidates 400c. FIG. 4 is a schematic diagram for explaining the priority in relay device selection. The management device 300 stores relay device information RDI, which is related to each of the plurality of relay device candidates 400c. The relay device information RDI includes position information, a processing load, a communication load of each of the plurality of relay device candidates 400c, etc.

The priority may be set based on a communication distance between the vehicle 100 and the remote support terminal 200, wherein the communication distance means length of the paths via each of the plurality of relay device candidates. In this case, the management device 300 has the position information of the vehicle 100, the remote support terminal 200, and the plurality of relay device candidates 400c. The position information of the remote support terminal 200 and the plurality of relay device candidates 400c is known information and is given to the management device 300 in advance. The position information of the vehicle 100 is acquired by a global navigation satellite system (GNSS) etc. mounted on the vehicle 100 and is provided from the vehicle 100 to the management device 300. The position information regarding the vehicle 100 may be periodically provided or may be included in the support request REQ. The management device 300 calculates geographical distances (relay distances) from the vehicles 100 to the remote support terminals 200 via each of the plurality of relay device candidates 400c. The shorter the obtained relay distance is, the higher the priority is set. That is, the management device 300 selects the relay device 400 from among the plurality of relay device candidates 400c so that the communication distance is optimized. As the communication distance, a distance on a network may be referred as an alternative to the geographical distance.

The priority may be set based on a load generated in a network used by each of the plurality of relay device candidates 400c (network load). For example, the management device 300 calculates a band usage rate with respect to a network bandwidth used by each of the plurality of relay device candidates 400c. The bandwidth usage rate is used as one of the measures indicating the network load. The priority is set higher as the obtained network load is smaller. That is, the management device 300 preferentially selects one (or some) of the relay device candidates 400c having a smaller network load as the relay device 400.

Furthermore, the priority may be a processing load (relay device load) generated in each of the plurality of relay device candidates 400c. For example, the management device 300 calculates a ratio of computing time to a unit time (CPU usage rate). The computing time means time during which a central processing unit (CPU) included in each of the plurality of relay device candidates 400c executes any processes. Alternatively, the CPU usage rate may be transmitted from each of the plurality of relay device candidates 400c to the management device 300. The CPU usage rate is used as one of the measures indicating the relay device load. The priority is set higher as the relay device load is smaller. That is, the management device 300 preferentially selects one (or some) of the relay device candidates 400c having a smaller processing load as the relay device 400.

### <Effects>

Preferentially selecting the relay device 400 with shorter communication distance reduces communication delay and network trouble between the vehicle 100 and the remote support terminal 200. When the relay device selection is performed with the priority based on the network load or the relay device load, the relay device 400 is selected so that the small network load or the small relay device load is achieved. As a result, the load distribution of the entire remote support system 1 is uniformed.

The management device 300 may calculate an evaluation score obtained by combining the priorities exemplified in this section and select the relay device 400 based on the obtained evaluation score.

### 4. CONFIGURATION EXAMPLE

### 4-1. vehicle

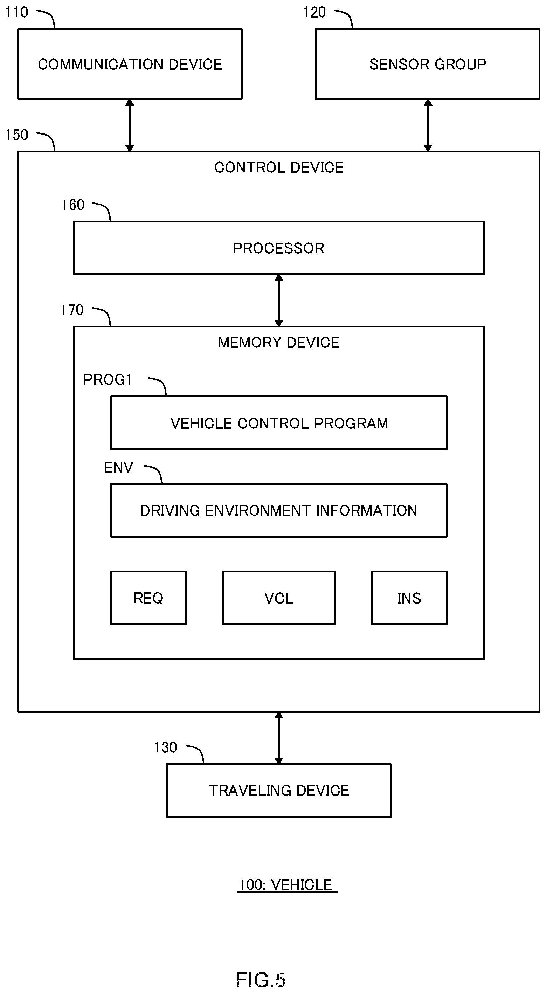

FIG. 5 is a block diagram showing a configuration of the vehicle 100. The vehicle 100 includes a communication device 110, a sensor group 120, a traveling device 130, and a control device 150.

The communication device 110 communicates with the outside the vehicle 100. For example, the communication device 110 communicates with the management device 300 and the relay device 400.

The sensor group 120 includes a recognition sensor, a vehicle state sensor, a position sensor, etc. The recognition sensor recognizes (detects) a situation around the vehicle 100. Examples of the recognition sensor include a camera, a laser imaging detection and ranging (LIDAR), and a radar. The vehicle state sensor detects the state of the vehicle 100. The vehicle state sensor includes a speed sensor, an acceleration sensor, a yaw rate sensor, a steering angle sensor, etc. The position sensor detects the position and the orientation of the vehicle 100. For example, the position sensor includes a GNSS.

The traveling device 130 includes a steering device, a driving device, and a braking device. The steering device steers the wheels. For example, the steering device includes an electric power steering (EPS) device. The driving device is a power source that generates a driving force. Examples of the driving device include an engine, an electric motor, and an in-wheel motor. The braking device generates a braking force.

The control device 150 is a computer that controls the vehicle 100. The control device 150 includes one or more processors 160 (hereinafter, simply referred to as "processor 160") and one or more memory devices 170 (hereinafter, simply referred to as "memory device 170"). The processor 160 may also be referred to as processing circuitry. The processor 160 executes various processes. For example, the processor 160 includes a CPU. The memory device 170 stores a variety of information necessary for process by the processor 160. Examples of the memory device 170 include a volatile memory, a nonvolatile memory, an HDD, and an SSD. The control device 150 may include one or more electronic control units (ECUs).

The vehicle control program PROG1 is a computer program executed by the processor 160. The processor 160 executes the vehicle control program PROG1, thereby realizing the functions of the control device 150. The vehicle control program PROG1 is stored in the memory device 170. Alternatively, the vehicle control program PROG1 may be recorded in computer-readable recording media.

The control device 150 acquires driving environment information ENV indicating the driving environment of the vehicle 100 using the sensor group 120. The driving environment information ENV is stored in the memory device 170.

The driving environment information ENV includes surrounding situation information indicating a result of recognition by the recognition sensor. For example, the surrounding situation information includes an image captured by a camera. The surrounding situation information may include object information regarding an object around the vehicle 100. Examples of the object around the vehicle 100 include a pedestrian, another vehicle (a preceding vehicle, a parked vehicle, etc.), a white line, a traffic light, a sign, a roadside structure, etc. The object information indicates the relative position and the relative velocity of the object with respect to the vehicle 100.

The driving environment information ENV includes vehicle state information indicating a vehicle state detected by the vehicle state sensor.

Further, the driving environment information ENV includes vehicle position information indicating the position and the orientation of the vehicle 100. The vehicle position information is obtained by the position sensor. The vehicle position information with high accuracy may be acquired by localization processing using the map information and the surrounding situation information (the object information).

The control device 150 executes vehicle travel control for controlling the travel of the vehicle 100. The vehicle travel control includes steering control, driving control, and braking control. The control device 150 executes vehicle travel control by controlling the traveling device 130 (the steering device, the driving device, and the braking device).

The control device 150 may perform the autonomous driving control based on the driving environment information ENV. More specifically, the control device 150 generates a travel plan of the vehicle 100 based on the driving environment information ENV. Further, the control device 150 generates a target trajectory necessary for the vehicle 100 to travel in accordance with the travel plan based on the driving environment information ENV. The target trajectory includes a target position and a target velocity. Then, the control device 150 performs vehicle travel control so that the vehicle 100 follows the target trajectory.

The control device 150 transmits the support request REQ to the management device 300 as necessary. During the remote support, the control device 150 communicates with the remote support terminal 200 via the relay device 400.

### 4-2. Management device

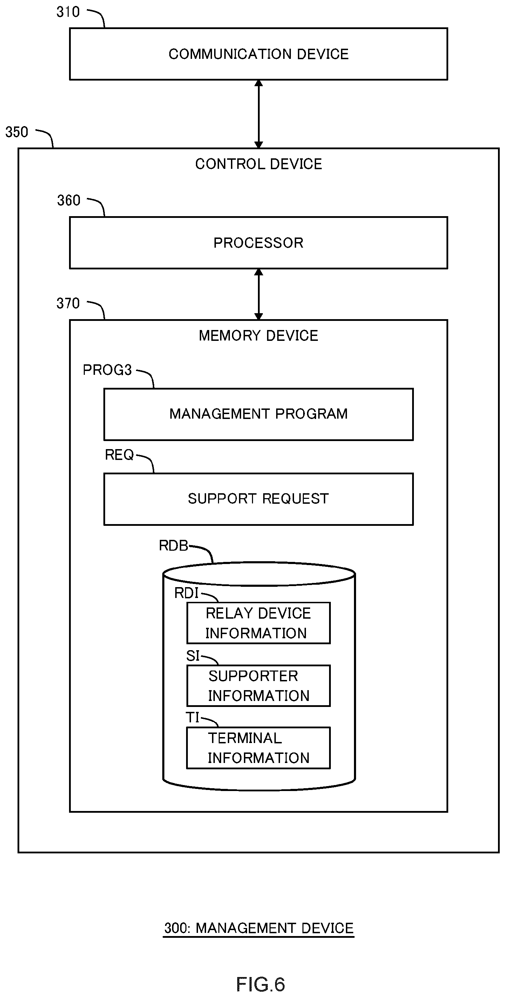

FIG. 6 is a block diagram showing a configuration of the management device 300. The management device 300 includes a communication device 310 and a control device 350.

The communication device 310 communicates with the vehicle 100, the remote support terminal 200, and the relay device 400.

The control device 350 controls the management device 300. The control device 350 includes one or more processors 360 (hereinafter, simply referred to as "processor 360") and one or more memory devices 370 (hereinafter, simply referred to as "memory device 370"). The processor 360 may also be referred to as processing circuitry. The processor 360 executes various processes. For example, the processor 360 includes a central processing unit (CPU). The memory device 370 stores various kinds of information necessary for process executed by the processor 360. Examples of the memory device 370 include a volatile memory, a nonvolatile memory, a hard disk drive (HDD), and a solid state drive (SSD).

The management program PROG3 is a computer program executed by the processor 360. The processor 360 executes the management program PROG3, thereby realizing the functions of the control device 350. The management program PROG3 is stored in the memory device 370. Alternatively, the management program PROG3 may be recorded in computer-readable recording media. The management program PROG3 may be provided via a network.

The memory device 370 further includes a resource database RDB. The resource database RDB stores and manages information related support resources required for the remote support. The resource database RDB includes supporter information SI, which is information on the remote supporter S, and terminal information TI, which is information on the remote support terminal 200. The supporter information SI includes, for example, availability, an amount of experience in remote support, license information, etc. The terminal information TI includes information such as the availability, the number of displays provided, and the performance of the input / output device. When the management device 300 selects a relay device, the resource database RDB includes relay device information RDI.

The control device 350 communicates with the vehicle 100, the remote support terminal 200, and the relay device 400 via the communication device 310.

The control device 350 receives the support request REQ transmitted from the vehicle 100. The support request REQ is stored in the memory device 370. The control device 350 refers to the resource database RDB and executes the resource selection for allocating a specific support resource to the vehicle 100.

The control device 350 transmits the allocation notification including the support request REQ and the information of the vehicle 100 to the remote support terminal 200. In response to the allocation notification, the remote supporter S starts remote supporting for the vehicle 100.

4-3. Relay device

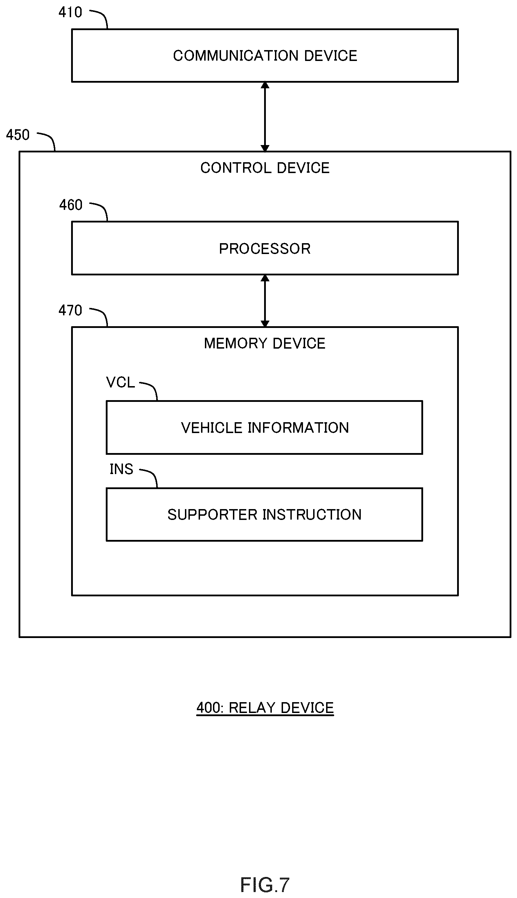

FIG. 7 is a block diagram showing a configuration of the relay device 400. The relay device 400 includes a communication device 410 and a control device 450.

The communication device 410 communicates with the vehicle 100 and the remote support terminal 200. When the relay device 400 performs the data recording process, the communication device 410 may communicate with the external memory device 500.

The control device 450 controls the relay device 400. The control device 450 includes one or more processors 460 (hereinafter, simply referred to as "processor 460") and one or more memory devices 470 (hereinafter, simply referred to as "memory device 470"). The processor 460 may also be referred to as a processing circuitry. The processor 460 executes various processes. For example, the processor 460 includes a central processing unit (CPU). The memory device 470 stores various kinds of information necessary for process executed by the processor 460. Examples of the memory device 470 include a volatile memory, a nonvolatile memory, a hard disk drive (HDD), and a solid state drive (SSD).

During the remote support, the control device 450 receives the vehicle information VCL from the vehicle 100. The control device 450 transmits the received vehicle information VCL to the remote support terminal 200. The control device 450 receives the supporter instruction INS transmitted from the remote support terminal 200. The control device 450 transmits the received supporter instruction INS to vehicle 100.

When the data recording process described above is performed, the control device 450 may store the recording target data RD in the memory device 470 in the control device 450. The control device 450 may transfer the recording target data RD to the external memory device 500 via the communication device 410. The external memory device 500 stores the received recording target data RD in its storage area.

### 4-4. Remote support terminal

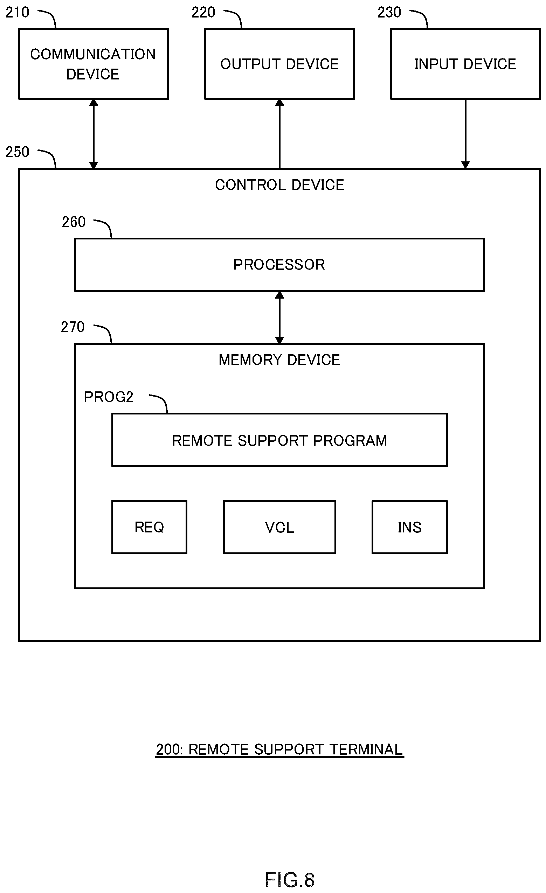

FIG. 8 is a block diagram showing a configuration of the remote support terminal 200. The remote support terminal 200 includes a communication device 210, an output device 220, an input device 230, and a control device 250.

The communication device 210 communicates with the vehicle 100, the management device 300, and the relay device 400. For example, the communication device 210 receives a notification (the allocation notification) indicating that the communication device 210 is allocated to the remote support from the communication device 310 in the management device 300. When the remote supporter S owns the remote support terminal 200, the remote supporter S confirms the allocation notification displayed on the output device 220 and recognizes that he/ she is allocated as the remote supporter S.

The allocation notification to the remote supporter S may be performed as a process different from the allocation of the remote support terminal 200. In this case, remote supporter S receives the allocation notification from communication device 310 or communication device 210. Specifically, a communication device (a smartphone, a tablet, a PC, etc.) owned by the remote supporter S receives the allocation notification. The allocation notification includes information regarding the remote support terminal 200 (e.g., a registration number) so that the remote supporter S can easily access the remote support terminal 200.

The output device 220 outputs various kinds of information. For example, the output device 220 includes a display device. The display device presents various kinds of information to remote supporter S by displaying it. As another example, the output device 220 may include a speaker.

Input device 230 receives an input from remote supporter S. For example, the input device 230 includes a touch panel, a keyboard, a mouse, a button, etc. The remote supporter S can input the supporter instruction INS using the input device 230.

The control device 250 controls the remote support terminal 200. The control device 250 includes one or more processors 260 (hereinafter, simply referred to as "processor 260") and one or more memory devices 270 (hereinafter, simply referred to as "memory device 270"). The processor 260 executes various processes. The processor 260 may also be referred to as a processing circuitry. For example, the processor 260 includes a CPU. The memory device 270 stores various kinds of information necessary for process by the processor 260. Examples of the storage device 270 include a volatile memory, a nonvolatile memory, an HDD, and an SSD.

The remote support program PROG2 is a computer program executed by the processor 260. The processor 260 executes the remote support program PROG2, thereby realizing the functions of the control device 250. The remote support program PROG2 is stored in the memory device 270. Alternatively, the remote support program PROG2 may be recorded in computer-readable recording media. The remote support program PROG2 may be provided via a network.

The control device 250 communicates with the management device 300 via the communication device 210 and communicates with the vehicle 100 via the relay device 400. The control device 250 receives the support request REQ and the vehicle information VCL transmitted from the vehicle 100. The control device 250 presents the vehicle information VCL to the remote supporter S by displaying the vehicle information VCL on the display device. The remote supporter S can recognize the state of the vehicle 100 and the surrounding situation based on the vehicle information VCL. The remote supporter S inputs the supporter instruction INS using the input device 230. The control device 250 transmits the input supporter instruction INS to vehicle 100 via relay device 400.

### 5. LARGE-SCALE REMOTE SUPPORT SYSTEM

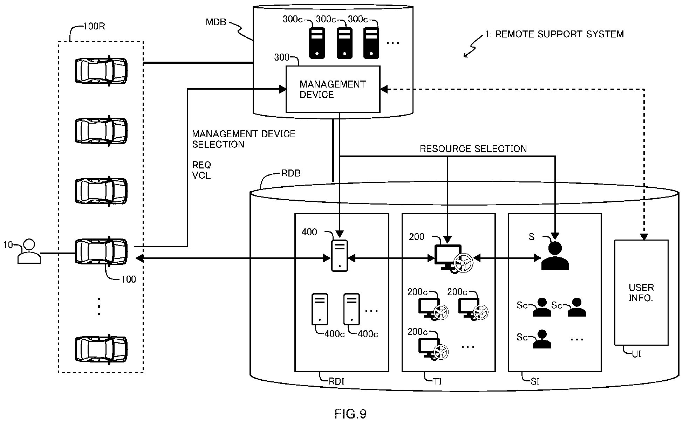

As mentioned in Section 2 and 3, the remote support system 1 is particularly effective when operated on a large scale. This section describes a large-scale embodiment of the remote support system 1 with reference to FIG. 9. The remote support system 1 is operated by a base (which may be referred to as a "remote support center") to which the plurality of supporter candidates Sc and the plurality of terminal candidates 200c belong and is provided as a service. A person who uses the service is referred to as a user. The support requester 10 described above means a user who transmits the support request REQ. In addition, a plurality of registered vehicles 100R that can be targets of the service are registered in the remote support system 1. Among the plurality of registered vehicles 100R, a vehicle that transmit the support request REQ are the vehicle 100 that actually use remote support.

### 5-1. Management device selection

When the remote support system 1 is operated on a large scale, the remote support system 1 may include a plurality of management device candidates 300c. The plurality of management device candidates 300c have the same configuration and function as the management device 300 described above. In this case, the vehicle 100 selects the management device 300, which actually manages the remote support for the vehicle 100, from among the plurality of management device candidates 300c. This process is hereinafter referred to as "management device selection". The control device 150 included in the vehicle 100 selects by the management device selection.

The vehicle 100 can access a "management device database MDB". The management device database MDB stores connection information (IP addresses, position information, etc.) of each of the plurality of management device candidates 300c. The management device database MDB may be shared among a plurality of registered vehicles 100R.

For starting the remote support, the vehicle 100 refers to the management device database MDB and executes the management device selection. The vehicle 100 can communicate with each of the plurality of management device candidates 300c via the communication device 110. When the remote support is required, the vehicle 100 sequentially transmits the support request REQ to the plurality of management device candidates 300c in turn. For example, the vehicle 100 firstly transmits the support requests REQ the management device candidate 300c located closest to the vehicle 100 based on the position information of the plurality of management device candidates 300c. When receiving the support request REQ, each of the plurality of management device candidates 300c starts operating as the management device 300 for remote support of the vehicle 100. Specifically, the management device 300 executes resource selection to allocate the remote supporter S and the remote support terminal 200 to the vehicle 100. The support request REQ transmitted for the management device selection may include identification information and position information of the vehicle 100, identification information of the support requester 10, contents of the required remote support, etc. After the management device selection, the management device 300 executes resource selection.

### 5-2. Resource selection

Each of the plurality of management device candidates 300c includes a resource database RDB that stores information related to the support resources. The supporter information SI stored in the resource database RDB includes information on each of the plurality of supporter candidates Sc. Similarly, the device information TI includes information on each of the plurality of device candidates 200c. The resource database RDB may be shared among a plurality of management device candidates 300c. In case that the management device 300 selects a relay device, the resource database RDB includes relay device information RDI.

The resource database RDB may store information other than the supporter information SI, the terminal information TI, and the relay device information RDI. For example, information on a plurality of registered vehicles 100R or users may be registered in advance. The management device 300 can flexibly execute the resource selection by storing and managing a variety of information in the resource database RDB.

### 5-2-1. Specific example of resource selection

Some specific examples of the resource selection will be described below.

### <Selection of remote supporter>

The management device 300 can use the position information of each of the plurality of supporter candidates Sc included in the supporter information SI for the resource selection. For example, the management device 300 transmits the allocation notification to the plurality of supporter candidates Sc in order of closeness to the vehicle 100. If the remote supporter S does not respond to the allocation notification within a certain period of time, the allocation notification may be sent to the second closest remote supporter S.

The language used by the user or each of the plurality of supporter candidates Sc may be registered in the resource database RDB. In this case, the remote supporter S which can cope with the language which the support requester 10 uses can be assigned. For example, when an English speaker who is traveling in Japan uses the remote support system 1 as the support requester 10, the management device 300 preferentially allocates the remote supporter S who can support in English.

In addition, the remote support history of each of the plurality of supporter candidates Sc may be registered in the resource database RDB. The remote support history includes information such as the total time, the number of times, and the area in which the remote support is performed. In this case, the management device 300 preferentially allocates the remote supporter S having a remote support experience in the area where the vehicle 100 is to the remote support. Alternatively, the work amount based on the total time or the number of times of the remote support may be calculated, and the remote supporter S may be selected so that the work amount is uniformed.

The information such as the identification information of the user and the language as described above is stored in the resource database RDB as the user information UI. The supporter information SI includes information such as the language used by the plurality of supporter candidates Sc and the remote support history.

<Selection of remote support terminal>

The management device 300 can use the position information of each of the plurality of candidate terminals 200c for resource selection. For example, the management device 300 can preferentially select one of the plurality of candidate terminals 200c close to the vehicle 100 to as the remote support terminal 200.

Further, instead of the management device 300 selecting the remote support terminal 200, the remote supporter S may access any of a plurality of available candidate terminals 200c to select the remote support terminal 200.

### <Relay device selection>

The management device 300 can select a relay device 400 from among the plurality of relay device candidates 400c through the relay device selection. The details of the relay device selection are as described above.

### 5-3. Effect

The remote support system 1 has the following effects important for large-scale service.

The remote support system 1 can flexibly adapt to a scale changing of the service. In the remote support system 1, information related to the support resources is aggregated in the resource database RDB. As the scale of the service enlarged, the amount of required support resources increases and the geographical area which the resources cover is also expanded. The remote support system 1 can manage information on the increased support resources by the resource database RDB and can flexibly adapt to geographical expansion by adding the management device 300 and the support resources as necessary.

Furthermore, the remote support system 1 has high service continuity. The plurality of registered vehicles 100R can access the plurality of management device candidates 300c via the management device database MDB. Therefore, even if some of the plurality of management device candidates 300c fails to work, the service can be continued without a problem by accessing an alternative device. The management device 300 selects a support resource via the resource database RDB. Thus, even if some of the support resources are unavailable, alternative resources can be selected.

Furthermore, the remote support system 1 can select the remote supporter S on the basis of his/ her locality and language. It is desirable that the remote supporter S sufficiently understands the traffic regulations and customs of the area where the vehicle 100 is located. Also, it is desirable that the remote supporter S can understand the language of the support requester 10. These points are important to secure the safety of the remote support and to make the support requester 10 feel safe.

The effect of the role sharing between the management device 300 and the relay device 400 described in Section 2 and 3, and the effect of the relay device selection described in Section 3 are also exhibited in the remote support system 1 with a large scale.

## Claims

1. A remote support system (1) for remote support of a moving body (100), the remote support system (1) comprising:
a management device (300); and
one or more relay devices (400) different from the management device (300), wherein
the management device (300) is configured to:
receive a support request (REQ) transmitted from the moving body (100); and
select a support resource required for the remote support, and
the one or more relay devices (400) are configured to relay data communication performed during the remote support between the moving body (100) and a remote support terminal (200).

2. The remote support system (1) according to claim 1, wherein
the one or more relay devices (400) are configured to at least temporarily record at least a part of data (RD) received via the data communication during the remote support.

3. The remote support system (1) according to claim 2, further comprising one or more memory devices (500) different from the one or more relay devices (400), wherein
the one or more relay devices (400) are further configured to:
transfer the recording target data (RD) stored in the one or more relay devices to the one or more memory devices (500); and
delete the recording target data (RD) stored in the one or more relay devices (400) after transferring the recording target data (RD).

4. The remote support system (1) according to claim 1, wherein
the management device (300) is further configured to select the one or more relay devices (400) from among a plurality of relay device candidates (400c).

5. The remote support system (1) according to claim 4, wherein
the management device (300) is further configured to:
set a priority for each relay device candidate (400c); and
select the one or more relay devices (400) from among the plurality of relay device candidates (400c) based on the priority.

6. The remote support system (1) according to claim 5, wherein
the priority for each relay device candidate (400c) is set based on a communication distance between the moving body (100) and the remote support terminal (200) via each relay device candidate (400c), with the priority for each relay device candidate (400c) to be higher as the communication distance is shorter.

7. The remote support system (1) according to claim 5, wherein
the priority for each relay device candidate (400c) is set based on a network load generated in a network connecting the moving body (100) and the remote support terminal (200) via each relay device candidate (400c), with the priority for each relay device candidate (400c) to be higher as the network load is smaller.

8. The remote support system (1) according to claim 5, wherein
the priority for each relay device candidate (400c) is set based on a processing load generated in each relay device candidate (400c), with the priority for each relay device candidate (400c) to be higher as the processing load is smaller.

9. A management method for remote support for a moving body (100) performed by a management device (300), the management method comprising:
receiving a support request (REQ) transmitted from the moving body (100);
selecting a support resource required for the remote support; and
selecting one or more relay devices (400), different from the management device (300), from among a plurality of relay device candidates (400c), wherein the one or more relay devices (400) are configured to relay data communication between the moving body (100) and a remote support terminal (200).

10. The management method according to claim 9, further comprising:
setting a priority for each relay device candidate (400c); and
selecting the one or more relay devices (400) from among the plurality of relay device candidates (400c) based on the priority.

11. The management method according to claim 10, wherein
the priority for each relay device candidate (400c) is set based on a communication distance between the moving body (100) and the remote support terminal (200) via each relay device candidate (400c), with the priority for each relay device candidate (400c) to be higher as the communication distance is shorter.

12. The management method according to claim 10, wherein
the priority for each relay device candidate (400c) is set based on a network load generated in a network connecting the moving body (100) and the remote support terminal (200) via each relay device candidate (400c), with the priority for each relay device candidate (400c) to be higher as the network load is smaller.

13. The management method according to claim 10, wherein
the priority for each relay device candidate (400c) is set based on a processing load generated in each relay device candidate (400c), with the priority for each relay device candidate (400c) to be higher as the processing load is smaller.
